# EUROPÄISCHE PATENTSCHRIFT

(11) **EP 3 635 800 B1**
(45) Veröffentlichungstag und Bekanntmachung des Hinweises auf die Patenterteilung: **03.04.2024**
(21) Anmeldenummer: 18729555.5
(22) Anmeldetag: 22.05.2018
(51) Int. Cl.: H01M 50/211, H01M 10/04

(54) **EINBAUVERFAHREN FÜR BATTERIEZELLEN IN EIN GEHÄUSE SOWIE EINBAUVORRICHTUNG HIERFÜR**
METHOD FOR INSTALLING BATTERY CELLS IN A HOUSING, AND INSTALLATION DEVICE THEREFOR
PROCÉDÉ D'ASSEMBLAGE POUR ÉLÉMENTS DE BATTERIE DANS UN BOÎTIER ET DISPOSITIF D'ASSEMBLAGE ASSOCIÉ

(30) Priorität: 08.06.2017 AT 504802017
(43) Veröffentlichungstag der Anmeldung: 15.04.2020
(73) Patentinhaber: AVL List GmbH, 8020 Graz (AT)
(72) Erfinder: OSWALD, Christian, 8020 Graz (AT); ALBRECHT, Reinhard, 8075 Hart bei Graz (AT)
(74) Vertreter: Babeluk, Michael
(86) Internationale Anmeldenummer: PCT/AT2018/060102
(87) Internationale Veröffentlichungsnummer: WO 2018/223167

(56) Entgegenhaltungen:
- DE-A1-102012 018 036
- DE-A1-102012 018 043
- US-A1- 2014 147 737
- US-A1- 2014 265 915
- US-A1- 2016 172 636

## Beschreibung

Die Erfindung betrifft ein Verfahren zum Einbauen eines Zellstapels an Batteriezellen in ein Gehäuse eines Batteriemoduls, wobei jeder Zellstapel eine äußere Seitenfläche aufweist, welche nach dem Einbauvorgang an jeweils einer inneren Gehäusefläche des Gehäuses anliegt, und während des Einbauvorganges der Zellstapel und/oder das Gehäuse quer zur Stapelrichtung in einer definierten Einbaurichtung bewegt werden, wobei vor dem Einbauvorgang in einem ersten Schritt an jeder äußeren Seitenfläche des Zellstapels zumindest ein Gleitelement angeordnet wird, wobei zumindest ein Ende des Gleitelements die jeweilige äußere Seitenfläche an zumindest einer Einbauseite des Zellstapels überragt, in einem weiteren Schritt das Gehäuse und der Zellstapel relativ zueinander in der Einbaurichtung so bewegt werden, dass zuerst das zumindest eine Ende des zumindest einen Gleitelements in das Gehäuse geführt wird oder das Gehäuse über das zumindest eine Ende des Gleitelements geführt wird, und danach in einem weiteren Schritt der Zellstapel an aneinandergereihten Batteriezellen samt des zumindest einen Gleitelements in das Gehäuse bzw. das Gehäuse über den Zellstapel an aneinandergereihten Batteriezellen samt dem zumindest einen Gleitelement geschoben wird, wobei die innere Gehäusefläche und eine dem Zellstapel abgewandte äußere Gleitfläche des zumindest einen Gleitelements relativ aneinander gleiten, bis der Zellstapel seine vorbestimmte Lage im Gehäuse erreicht hat, sowie eine Einbauvorrichtung zur Durchführung dieses Verfahrens.

Viele heutige Lithium-Ionen-Zellen weisen beim Laden/Entladen sowie durch Alterungseffekte über die Lebensdauer eine gewisse Volumenvergrößerung auf. Um eine möglichst gleichmäßige Vorspannung unter Berücksichtigung der Volumenänderung zu gewährleisten, ist es zumeist nicht ausreichend, die Batteriezellen ohne weitere Maßnahmen in einem Modulgehäuse zu verbauen. Dazu werden üblicherweise Ausgleichselemente - sogenannte Compression Pads -, insbesondere elastische Elemente am Ende bzw. zwischen den gestapelten Batteriezellen in einem Modul verbaut. Diese Ausgleichselemente gewährleisten bei entsprechender Auslegung ein Einhalten der Vorspannung auf die Batteriezellen innerhalb des spezifizierten Bereichs auch bei einer Volumenänderung der Batteriezellen. Als weitere Funktion der Ausgleichselemente ist die mechanische Fixierung der gestapelten Batteriezellen zu nennen. Um die Funktion über die gesamte Lebensdauer gewährleisten zu können, weisen die Ausgleichselemente oft einen Volumenbedarf auf, der einen negativen Einfluss auf die erreichbare Energiedichte des Batteriemodules hat, weil weniger nutzbarer Raum für den Einbau von Batteriezellen zur Verfügung steht.

Da diese Ausgleichselemente im unbelasteten Zustand die Außenabmessungen des Zellstapels vergrößern, passt dieser bei Batteriemodulkonzepten, welche eine Vorspannung der Zellen erfordern, im unbelasteten Zustand meist nicht in das Modulgehäuse.

Es ist bekannt ein geteiltes Gehäuse zu verwenden, wobei die Vorspannung durch Zusammenziehen der beiden Gehäuseteile erreicht wird. Das Zusammenziehen und Zusammenhalten der Gehäuseteile erfolgt mittels Spann- oder Zugbänder, Schrauben oder unlösbare Fügeverfahren, wie zum Beispiel Schweißen.

Diese Maßnahmen bedeuten meist einen Mehraufwand und/oder eine zusätzliche Belastung der Batteriezellen, wodurch eine Schädigung oder vorzeitige Alterung der Batteriezellen nicht auszuschließen ist.

In der US 2016/0172636 A1 ist eine Einsatzführungsvorrichtung zum Einsetzen einer filmbeschichteten Batteriezelle in einen zwischen zwei Platten befindlichen Raum beschrieben, wobei Führungselemente an den Platten vorgesehen sind, die die Anschlussklemmen der Batteriezelle während des Einsetzens der Batteriezelle führen.

Aufgabe der Erfindung ist es diese Nachteile zu vermeiden, den Montageaufwand und die Belastung der Batteriezellen zu vermindern.

Diese Aufgabe wird erfindungsgemäß durch ein Verfahren der eingangs erwähnten Art dadurch gelöst, dass zumindest ein Greifelement vorgesehen ist, das in Vorbereitung auf den Einbauvorgang durch das Gehäuse geführt wird, wobei das zumindest eine Greifelement während des Gleitens des Zellstapels in das Gehäuse mit dem zumindest einen Ende des Gleitelements in Eingriff steht.

Somit wird vor dem Einbauvorgang in einem ersten Schritt an jeder äußeren Seitenfläche des Zellstapels zumindest ein - vorzugsweise durch zumindest eine Folie gebildetes - Gleitelement angeordnet, wobei zumindest ein Ende des Gleitelements die jeweilige äußere Seitenfläche an zumindest einer Einbauseite des Zellstapels überragt, in einem weiteren Schritt das Gehäuse und der Zellstapel relativ zueinander in der Einbaurichtung so bewegt werden, dass zuerst das zumindest eine Ende des zumindest einen Gleitelements in das Gehäuse geführt wird oder das Gehäuse über das zumindest eine Ende des Gleitelements geführt wird, und danach in einem weiteren Schritt der Zellstapel an - vorzugsweise vorspannungslos - aneinandergereihten Batteriezellen samt des zumindest einen Gleitelements in das Gehäuse bzw. das Gehäuse über den Zellstapel an - vorzugsweise vorspannungslos - aneinandergereihten Batteriezellen samt dem zumindest einen Gleitelement geschoben wird, wobei die innere Gehäusefläche und eine dem Zellstapel abgewandte äußere Gleitfläche des zumindest einen Gleitelements relativ aneinander gleiten, bis der Zellstapelseine vorbestimmte Lage im Gehäuse erreicht hat.

Im ersten Verfahrensschritt werden vorzugsweise an den beiden einander gegenüberliegenden Seitenflächen des Zellstapels Gleitelemente so aufgelegt, dass das Ende jedes Gleitelements zumindest eine Seitenfläche des Zellstapels überragt. Das überragende Ende des Gleitelements dient während des Einbauvorgangs als Applizier- und Einbauhilfe.

Unter "Seitenfläche des Zellstapels" werden im Rahmen dieser Offenbarung jene zwei einander gegenüberliegenden Außenflächen des Zellstapels verstanden, die im Wesentlichen parallel zu den Längsmittelebenen der Batteriezellen, und damit normal zur Stapelrichtung verlaufen.

Der Zellstapel weist vor dem Einbau in das Gehäuse in Bezug auf die durch gegenüberliegende innere Gehäuseflächen definierte lichte Weite des Gehäuses ein geringes Übermaß auf. Trotzdem kann erfindungsgemäß der Zellstapel in das Gehäuse eingeschoben werden, ohne dass die Batteriezellen in einem separaten Verfahrensschritt vorher zusammengedrückt werden müssen. Die Gleitelemente üben hierbei zwischen Gehäuse und Zellstapel eine schuhlöffelähnliche Funktion auf den Zellstapel aus. Durch die als Führung für den Zellstapel wirkenden Gleitelemente wird selbsttätig der Zellstapel während des Zustell- und Beschickungsvorganges auf das nötige Maß zusammengedrückt, wodurch der Zellstapel mit nur geringem Kraftaufwand seitlich in Einbaurichtung in das Gehäuse eingeschoben werden kann. Das Gehäuse braucht dabei nicht geteilt ausgeführt sein und kann somit einen geschlossenen Querschnitt aufweisen.

Erfindungsgemäß ist hierzu zumindest ein Greifelement vorgesehen, das in Vorbereitung auf den Einbauvorgang durch das Gehäuse geführt wird, und das zumindest eine Greifelement insbesondere während des Gleitens des Zellstapels in das Gehäuse mit dem zumindest einen Ende des Gleitelements in Eingriff steht.

Ein besonders sicheres Transferieren des Zellstapels in das Gehäuse ist gewährleistet, wenn zwei Folienbahnen des als Folie ausgebildeten Gleitelements im Bereich der äußeren Stirnfläche des Zellstapels übereinander angeordnet werden, wobei das zumindest eine Greifelement mit beiden Enden in Eingriff steht.

Hierfür ist besonders bevorzugt vorgesehen, dass das zumindest ein Greifelement über zwei Fixiereinrichtungen verfügt, wobei die erste Fixiereinrichtung in ein erstes Ende und die zweite Fixiereinrichtung in ein zweites Ende des Gleitelements eingreift.

Nach der Positionierung des Zellstapels in dem Gehäuse wird besonders bevorzugt das zumindest ein Gleitelement entfernt, sobald die vorbestimmten Lage des Zellstapels im Gehäuse erreicht wird, wobei hierzu das Gleitelement zwischen der inneren Gehäusefläche und der äußeren Seitenfläche des Zellstapels aus dem Gehäuse in oder entgegen der Einbaurichtung herausgezogen wird.

Hierzu kann in einer ersten Variante zur Entfernung des Gleitelements nur an einer der beiden - das Gleitelement bildenden - übereinanderliegenden Folienbahnen, vorzugsweise an einer äußeren Folienbahn gezogen werden.

In einer bevorzugten Variante der Erfindung wird hierzu das zumindest eine Gleitelement mithilfe des zumindest einen Greifelements aus dem Gehäuse herausgezogen.

Des Weiteren kann das Herausziehen der Gleitelemente bei einer weiteren Ausführung der Erfindung, bei der die Gleitelemente durch eine wickelbare Folie gebildet werden, ganz einfach dadurch erfolgen, dass die Gleitelemente durch Aufrollen auf einem Aufrollelement aus dem Gehäuse herausgezogen werden und gegebenenfalls auf einer Rolle oder Haspel aufgewickelt werden, um sie beispielsweise erneut als Gleitelement zu verwenden.

Die Aufgabe wird des Weiteren durch eine Einbauvorrichtung zum Einbauen eines Zellstapels an Batteriezellen in einem Gehäuse eines Batteriemoduls mit einer ersten Manipulationseinrichtung zum Anordnen und/oder zur Aufnahme zumindest eines Zellstapels an Batteriezellen und einer zweite Manipulationseinrichtung zur Aufnahme eines - vorzugsweise einen geschlossenen Querschnitt aufweisenden einstückigen - Gehäuses, erfindungsgemäß dadurch gelöst, dass zumindest ein Gleitelement, vorzugsweise eine wickelbare Folie, an zumindest einer Seitenfläche des Zellstapels anordenbar ist, und zumindest ein Greifelement für das zumindest eine Gleitelement durch das Gehäuse hindurch bewegbar ist.

In einer Ausführung der Erfindung wird vorgeschlagen, dass zumindest ein Gleitelement durch eine vorzugsweise wickelbare Folie gebildet ist. Besonders vorteilhaft ist es, wenn jedes Gleitelement durch zwei übereinandergelegte Folienbahnen gebildet, wobei besonders bevorzugt die beiden, auf einer Einbaufläche des Zellstapels angeordneten Enden der Folie diese Einbaufläche überragen, um von Fixiereinrichtungen des zumindest einen Greifelements leichter aufgenommen werden zu können.

Hierbei ist bevorzugterweise vorgesehen, dass zumindest eine Seitenfläche des Zellstapels eine Klebeschicht aufweist, wobei vorzugsweise die Seitenfläche des Zellstapels durch ein Ausgleichselement gebildet ist. Diese Klebeschicht dient der gegebenenfalls vorübergehenden Fixierung des zumindest einen Gleitelements an zumindest einer Seitenfläche des Zellstapels.

Alternativ oder additiv hierzu weist in einer weiteren Ausführung der Erfindung zumindest eine - im zusammengebauten Zustand der zumindest einen Seitenfläche des Zellstapels zugewandte - innere Gehäusefläche eine Klebeschicht auf, wobei vorzugsweise die innere Gehäusefläche durch ein Ausgleichselement gebildet ist.

Insbesondere auch in Hinblick auf das nach dem Einbauvorgang gegebenenfalls erforderliche Entfernen des zumindest einen Gleitelements ist in einer weiteren Ausführung der Erfindung vorgesehen, dass das Material des Gleitelements und des Klebers der Klebeschicht derart aufeinander abgestimmt sind, dass die auf das Gleitelement wirkende Klebekraft bzw. Haftkraft, zumindest zum Zeitpunkt des Herausziehens des zumindest einen Gleitelements zwischen dem Zellstapel und dem Gehäuse einen definierten Wert nicht überschreitet.

Für den Einbauvorgang besonders vorteilhaft ist, wenn die zweite Manipulationseinrichtung und/oder das in der zweiten Manipulationseinrichtung angeordnete Gehäuse in Einbaurichtung linear verfahrbar sind. Hierbei wird das Gehäuse in unmittelbarer Nähe des Zellstapels verbracht und das zumindest eine durch das Gehäuse hindurchgeführte Greifelement ergreift das zumindest eine Gleitelement, um den Zellstapel in das Gehäuse zu ziehen.

Alternativ hierzu wird das einen geschlossenen Querschnitt aufweisende einteilige Gehäuse linear in Einbaurichtung quer zur Stapelrichtung zuerst entlang des Gleitelements über den Zellstapel der Batteriezellen geschoben. Die Folie wirkt dabei wiederum - ähnlich einem Schuhlöffel - als Einbauhilfe, indem das Gehäuse in Einbaurichtung über den Zellstapel geführt und dabei zur Überwindung des Übermaßes - der Zellstapel in Stapelrichtung komprimiert wird. Darüber hinaus kann mittels der Folie die Reibungskraft beim Einbau des Zellstapels im Gehäuse minimiert werden.

Ist einmal die vordefinierte Lage des Zellstapels innerhalb des Gehäuses erreicht, so kann das Gleitelement in Weiterführung der Erfindung mittels einer dritten Manipulationseinrichtung zwischen dem Zellstapel und dem Gehäuse herausgezogen werden. Ein besonders einfaches Entfernen des durch eine Folie gebildeten Gleitelements lässt sich erreichen, wenn zumindest ein vorzugsweise durch eine Walze oder Haspel gebildetes Aufrollelement zum Aufrollen des Gleitelements vorgesehen ist, welches Aufrollelement durch einen Aktuator mit einem Antriebsmoment beaufschlagbar ist.

Im Folgenden wird anhand eines nicht-einschränkenden Ausführungsbeispiels mit zugehörigen Figuren die Erfindung näher erläutert. Hierin zeigen:
- Fig. 1: eine schematische Darstellung der erfindungsgemäßen Einbauvorrichtung in Vorbereitung des eigentlichen Einbauvorgangs;
- Fig. 2: eine schematische Darstellung des erfindungsgemäßen Greifelements in einer ersten geöffneten Position;
- Fig. 3: das Greifelement aus Fig. 2 in der geschlossenen Position;
- Fig. 4: die Einbauvorrichtung aus Fig. 1 in einer zweiten Position während des Einbauvorgangs;
- Fig. 5: die Einbauvorrichtung aus Fig. 1 in einer dritten Position während des Einbauvorgangs;

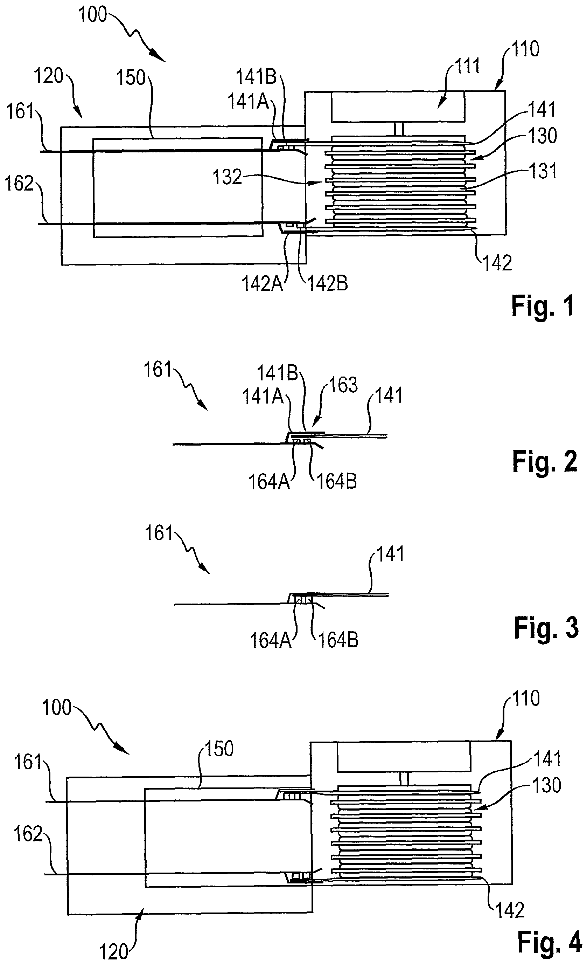

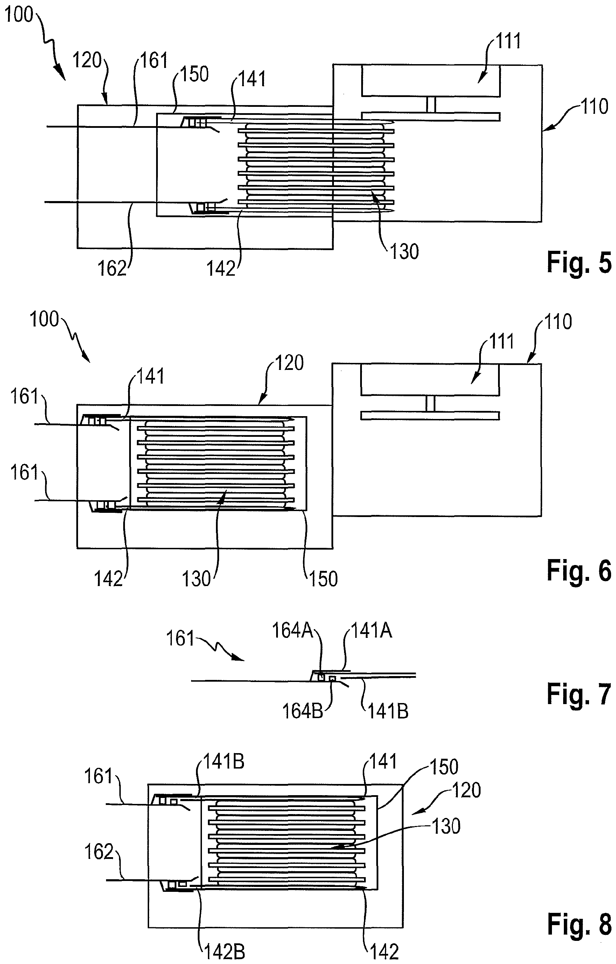

- Fig. 5: die Einbauvorrichtung aus Fig. 1 in einer vierten Position während des Einbauvorgangs;
- Fig. 6: die Einbauvorrichtung aus Fig. 1 nach erfolgtem Einbau des Zellstapels in dem Gehäuse;
- Fig. 7: das Greifelement aus Fig. 2 in einer teilweisen geschlossenen Position bei der Entfernung des Gleitelements; und
- Fig. 8: die zweite Manipulationseinrichtung der Einbauvorrichtung aus Fig. 1 bei der Entfernung der Gleitelemente.

In einer schematischen Darstellung ist in der Fig. 1 eine erfindungsgemäße Einbauvorrichtung 100 mit einer ersten Manipulationseinrichtung 110 sowie einer zweiten Manipulationseinrichtung 120 dargestellt.

In der ersten Manipulationseinrichtung 110 ist ein Zellstapel 130 mit einer Vielzahl von Batteriezellen 131 angeordnet und über eine Fixiereinrichtung 111 in seiner Position fixiert, ohne dass die Fixiereinrichtung 111 einen Druck und/oder eine Vorspannung auf den Zellstapel 130 ausübt.

An den Seitenflächen des Zellstapels 130 sind zwei Gleitelemente 141, 142 angeordnet. Die beiden Gleitelemente 141, 142 sind bei dieser Ausführung der Erfindung als doppellagige Folien ausgeführt, deren Enden 141A, 141B des ersten Gleitelements 141 sowie deren Enden 142A, 142B des zweiten Gleitelements 142 über die Einbaufläche 132 des Zellstapels 130 hervorragen. Hierbei überragt das erste Ende 141A das zweite Ende 141B des ersten Gleitelements 141 sowie das erste Ende 142A das zweite Ende 142B des zweiten Gleitelements 142. Die Gleitelemente 141, 142 sind in dieser Ausführung der Erfindung an den Seitenflächen des Zellstapels 130 mittels Klebeschicht in ihrer Position lösbar angeordnet.

Unter "Einbaufläche 132 des Zellstapels" wird im Rahmen dieser Offenbarung jene Seitenfläche des Zellstapels 130 verstanden, die der zweiten Manipulationseinrichtung 120 zugewandt ist.

In der zweiten Manipulationseinrichtung 120 ist ein Gehäuse 150 angeordnet, in das der Zellstapel 130 erfindungsgemäß ohne Vorspannung einzubringen ist. Das Gehäuse 150, auch "Monoframe" genannt, ist hierbei im Wesentlichen rohrartig mit einem vorzugsweise quadratischen oder rechteckigen Querschnitt beispielsweise als Profilrohr ausgebildet.

Durch das in der zweiten Manipulationseinrichtung 120 angeordnete Gehäuse 150 sind zwei Greifelemente 161, 162 hindurchgeführt, wobei eine schematische Darstellung dieser Greifelemente 161, 162 in geöffneter Position der Fig. 2 entnommen werden kann. Jedes Greifelement 161, 162 verfügt über eine Greifeinrichtung 163 mit Fixierelementen 164A, 164B, die dazu eingerichtet sind, jeweils ein Ende 141A, 141B, 142A, 142B der beiden Gleitelemente 141, 142 unabhängig voneinander in der Greifeinrichtung 163 zu fixieren und wieder zu lösen.

Um den Zellstapel 130 mittels der beiden Greifelemente 161, 162 in das Gehäuse 150 vorspannungsfrei zu transferieren, wird zunächst in einem ersten Schritt ein Zellstapel 130 mit Batteriezellen 131 in der ersten Manipulationseinrichtung 110 angeordnet und die beiden Gleitelemente 141, 142 vorzugsweise mittels Klebeschicht an den Seitenflächen des Zellstapels 130 angebracht. Nach Anordnung des Gehäuses 150 innerhalb der zweiten Manipulationseinrichtung 120 wird die zweite Manipulationseinrichtung 120 in Relation zur ersten Manipulationseinrichtung 110 derart ausgerichtet, dass das Gehäuse 150 im Wesentlichen fluchtend zum Zellstapel 130 angeordnet ist.

Anschließend werden die beiden Greifelemente 161, 162 durch das Gehäuse 150 hindurchgeführt und die beiden Enden 141A, 141B des ersten Gleitelements 141 von dem ersten Greifelement 161 erfasst, wobei das erste Fixierelement 164A das erste Ende 141A und die zweite Fixiereinrichtung 164B das zweite Ende 141B des ersten Gleitelements 141 in der Greifeinrichtung 163 fixieren (Fig. 3). Auf gleiche Weise erfolgt die Fixierung der beiden Enden 142A, 142B des zweiten Gleitelements 142 durch das zweite Greifelement 162.

Daraufhin wird das Gehäuse 150 - wie in Fig. 4 dargestellt - an die erste Manipulationseinrichtung 110 herangeführt. Durch Ziehen an den Gleitelementen 141, 142 mithilfe der Greifelemente 161, 162 wird der Zellstapel 130 in das Gehäuse 150 hineingezogen (Fig. 5). Da der Zellstapel 130 im unverpressten Zustand in seiner Ausdehnung geringfügig größer als der Querschnitt des Gehäuses 150 ist, wird beim Hineinziehen des Zellstapels 130 beginnend an der Frontfläche durch Entlanggleiten der Gleitelemente 141, 142 an der Kante des Gehäuses 150 der Zellstapel 130 geringfügig zusammengepresst.

Sobald sich der Zellstapel 130 wie in Fig. 6 dargestellt innerhalb der zweiten Manipulationseinrichtung 120 befindet, werden die Gleitelemente 141, 142 von dem Zellstapel 130 abgelöst. Wie in der Fig. 7 gezeigt wird hierfür zunächst die zweite Greifeinrichtung 164B geöffnet, so dass das zweite Ende 141B des ersten Greifelements 141 frei liegt. Durch Herausziehen des ersten Greifelements 161 wird das folienartige Gleitelement 141 an seinem ersten Ende 141A, das weiterhin in der ersten Fixiereinrichtung 164A angeordnet ist, von der Seitenfläche des Zellstapels 130 abgezogen. Hierfür ist wesentlich, dass die Klebekraft der Gleitelemente 141, 142 auf den Seitenflächen des Zellstapels 130 ausreichend hoch für den Transfer des Zellstapels 130 aus der ersten Manipulationseinrichtung 110 in die zweite Manipulationseinrichtung 120 ist, jedoch ausreichend gering um nach erfolgtem Transfer die Gleitelemente 141, 142 von den Seitenflächen des Zellstapels 130 ablösen zu können.

Sobald die Gleitelemente 141, 142 von dem Zellstapel 130 entfernt wurden, expandiert dieser Zellstapel 130 innerhalb des Gehäuses 150, wobei gegebenenfalls vorgesehen sein kann, dass nach dem Ablösen der Gleitelemente 141, 142 eine Klebeschicht auf den Seitenflächen des Zellstapels 130 verbleibt, die daraufhin in Kontakt mit zwei Gehäuseinnenflächen des Gehäuses 150 steht, was zu eine zusätzlichen Fixierung des Zellstapels 130 innerhalb des Gehäuses 150 zur Folge hat.

## Patentansprüche

1. Verfahren zum Einbauen eines Zellstapels (130) an Batteriezellen (131) in ein Gehäuse (150) eines Batteriemoduls, wobei jeder Zellstapel (130) eine äußere Seitenfläche aufweist, welche nach dem Einbauvorgang an jeweils einer inneren Gehäusefläche des Gehäuses anliegt, und während des Einbauvorganges der Zellstapel (130) und/oder das Gehäuse (150) quer zur Stapelrichtung in einer definierten Einbaurichtung bewegt werden, **wobei** vor dem Einbauvorgang in einem ersten Schritt an jeder äußeren Seitenfläche des Zellstapels (130) zumindest ein - vorzugsweise durch zumindest eine Folie gebildetes - Gleitelement (141, 142) angeordnet wird, wobei zumindest ein Ende (141A, 141B, 142A, 142B) des Gleitelements (141, 142) die jeweilige äußere Seitenfläche an zumindest einer Einbauseite des Zellstapels (130) überragt, in einem weiteren Schritt das Gehäuse (150) und der Zellstapel (130) relativ zueinander in der Einbaurichtung so bewegt werden, dass zuerst das zumindest eine Ende (141A, 141B, 142A, 142B) des zumindest einen Gleitelements (141, 142) in das Gehäuse (150) geführt wird oder das Gehäuse (150) über das zumindest eine Ende (141A, 141B, 142A, 142B) des Gleitelements (141, 142) geführt wird, und danach in einem weiteren Schritt der Zellstapel (130) an - vorzugsweise vorspannungslos - aneinandergereihten Batteriezellen (131) samt des zumindest einen Gleitelements (141, 142) in das Gehäuse (150) bzw. das Gehäuse (150) über den Zellstapel (130) an - vorzugsweise vorspannungslos - aneinandergereihten Batteriezellen (131) samt dem zumindest einen Gleitelement (141, 142) geschoben wird, wobei die innere Gehäusefläche und eine dem Zellstapel (130) abgewandte äußere Gleitfläche des zumindest einen Gleitelements (141, 142) relativ aneinander gleiten, bis der Zellstapel (130) seine vorbestimmte Lage im Gehäuse (150) erreicht hat, **dadurch gekennzeichnet, dass** zumindest ein Greifelement (161, 162) vorgesehen ist, das in Vorbereitung auf den Einbauvorgang durch das Gehäuse (150) geführt wird, wobei das zumindest eine Greifelement (161, 162) während des Gleitens des Zellstapels (130) in das Gehäuse (150) mit dem zumindest einen Ende (141A, 141B, 142A, 142B) des Gleitelements (141, 142) in Eingriff steht.

2. Verfahren nach Anspruch 1, **dadurch gekennzeichnet, dass** zwei Folienbahnen des als Folie ausgebildeten Gleitelements (141, 142) im Bereich der äußeren Seitenfläche des Zellstapels (130) übereinander angeordnet werden, wobei das zumindest ein Greifelement (161, 162) mit beiden Enden (141A, 141B, 142A, 142B) in Eingriff steht.

3. Verfahren nach Anspruch 1 oder 2, **dadurch gekennzeichnet, dass** das zumindest ein Greifelement (161, 162) über zwei Fixiereinrichtungen (164A, 164B) verfügt, wobei die erste Fixiereinrichtung (164A) in ein erstes Ende (141A, 142A) und die zweite Fixiereinrichtung (164B) in ein zweites Ende (141B, 142B) des Gleitelements (141, 142) eingreift.

4. Verfahren nach einem der Ansprüche 1 bis 3, **dadurch gekennzeichnet, dass** nach der Positionierung des Zellstapels (130) in dem Gehäuse (150) das zumindest ein Gleitelement (141, 142) entfernt wird, sobald die vorbestimmten Lage des Zellstapels (130) im Gehäuse (150) erreicht wird, indem das Gleitelement (141, 142) zwischen der inneren Gehäusefläche und der äußeren Seitenfläche des Zellstapels (130) aus dem Gehäuse (150) in oder entgegen der Einbaurichtung herausgezogen wird.

5. Verfahren nach Anspruch 4, **dadurch gekennzeichnet, dass** zur Entfernung des Gleitelements (141, 142) nur an einer der beiden - das Gleitelement (141, 142) bildenden - übereinanderliegenden Folienbahnen, vorzugsweise an einer äußeren Folienbahn - gezogen wird.

6. Verfahren nach Anspruch 4 oder 5, **dadurch gekennzeichnet, dass** zumindest ein Gleitelement (141, 142) durch Aufrollen auf einem Aufrollelement aus dem Gehäuse (150) herausgezogen wird.

7. Verfahren nach Anspruch 4 oder 5, **dadurch gekennzeichnet, dass** das zumindest eine Gleitelement (141, 142) mithilfe des zumindest einen Greifelements (161, 162) aus dem Gehäuse (150) herausgezogen wird.

8. Einbauvorrichtung (100) zur Durchführung des Verfahren zum Einbauen eines Zellstapels (130) an Batteriezellen (131) in einem Gehäuse (150) eines Batteriemoduls, nach einem der Ansprüche 1 bis 7, mit einer ersten Manipulationseinrichtung (110) zum Anordnen und/oder zur Aufnahme zumindest eines Zellstapels (130) an Batteriezellen (131) und einer zweiten Manipulationseinrichtung (120) zur Aufnahme eines - vorzugsweise einen geschlossenen Querschnitt aufweisenden einstückigen - Gehäuses (150), **dadurch gekennzeichnet, dass** zumindest ein Gleitelement (141, 142), vorzugsweise eine Folie, an zumindest einer Seitenfläche des Zellstapels (130) anordenbar ist, und zumindest ein Greifelement (161, 162) für das zumindest eine Gleitelement (141, 142) durch das Gehäuse (150) hindurch bewegbar ist.

9. Einbauvorrichtung (100) nach Anspruch 8, **dadurch gekennzeichnet, dass** zumindest ein Gleitelement (141, 142) durch eine vorzugsweise zweilagig anordenbare Folie gebildet ist.

10. Einbauvorrichtung (100) nach einem der Ansprüche 8 oder 9, **dadurch gekennzeichnet, dass** zumindest eine Seitenfläche des Zellstapels (130) eine Klebeschicht aufweist, wobei vorzugsweise die Seitenfläche des Zellstapels (130) durch ein Ausgleichselement gebildet ist.

11. Einbauvorrichtung (100) nach einem der Ansprüche 8 bis 10, **dadurch gekennzeichnet, dass** zumindest eine - im zusammengebauten Zustand der zumindest eine Seitenfläche des Zellstapels (130) zugewandte - innere Gehäusefläche eine Klebeschicht aufweist, wobei vorzugsweise die innere Gehäusefläche durch ein Ausgleichselement gebildet ist.

12. Einbauvorrichtung (100) nach Anspruch 10 oder 11, **dadurch gekennzeichnet, dass** das Material des Gleitelements (141, 142) und des Klebers der Klebeschicht derart aufeinander abgestimmt sind, dass die auf das Gleitelement (141, 142) wirkende Klebekraft bzw. Haftkraft, zumindest zum Zeitpunkt des Herausziehens des zumindest einen Gleitelements (141, 142) zwischen dem Zellstapel (130) und dem Gehäuse (150) einen definierten Wert nicht überschreitet.

13. Einbauvorrichtung nach einem der Ansprüche 8 bis 12, **dadurch gekennzeichnet, dass** die zweite Manipulationseinrichtung (120) und/oder das in der zweiten Manipulationseinrichtung (120) angeordnete Gehäuse (150) in Einbaurichtung linear verfahrbar und fixierbar sind.

14. Einbauvorrichtung nach Anspruch 13, **dadurch gekennzeichnet, dass** zumindest ein vorzugsweise durch eine Walze oder Haspel gebildetes Aufrollelement zum Aufrollen des Gleitelements (141, 142) vorgesehen ist, welches in Aufrollrichtung durch einen Aktuator mit einem Antriebsmoment beaufschlagbar ist.

## Claims

1. Method for installing a cell stack (130) of battery cells (131) in a housing (150) of a battery module, wherein each cell stack (130) has an outer side surface which, after the installation process, rests against a respective inner housing surface of the housing, and, during the installation process, the cell stack (130) and/or the housing (150) is moved transversely to the stacking direction in a defined installation direction, **wherein** at least one sliding element (141, 142) - preferably formed by at least one film - is arranged on each outer side surface of the cell stack (130) in a first step prior to the installation process, wherein at least one end (141A, 141B, 142A, 142B) of the sliding element (141, 142) projects beyond the respective outer side surface on at least one installation side of the cell stack (130), in a further step the housing (150) and the cell stack (130) are moved relative to one another in the installation direction such that first the at least one end (141A, 141B, 142A, 142B) of the at least one sliding element (141, 142) is guided into the housing (150) or the housing (150) is guided over the at least one end (141A, 141B, 142A, 142B) of the sliding element (141, 142), and then, in a further step, the cell stack (130) of battery cells (131) arranged in a row - preferably without pretension - together with the at least one sliding element (141, 142) is pushed into the housing (150) or the housing (150) is pushed over the cell stack (130) of battery cells (131) arranged in a row - preferably without pretension - together with the at least one sliding element (141, 142), wherein the inner housing surface and an outer sliding surface of the at least one sliding element (141, 142) facing away from the cell stack (130) slides relatively against one another until the cell stack (130) has reached its predetermined position in the housing (150), **characterised in that** at least one gripping element (161, 162) is provided, which is guided through the housing (150) in preparation for the installation process, wherein the at least one gripping element (161, 162) is in engagement with the at least one end (141A, 141B, 142A, 142B) of the sliding element (141, 142) during the sliding of the cell stack (130) into the housing (150).

2. Method according to claim 1, **characterised in that** two film webs of the sliding element (141, 142), which is designed as a film, are arranged one above the other in the region of the outer side surface of the cell stack (130), wherein the at least one gripping element (161, 162) is in engagement with both ends (141A, 141B, 142A, 142B).

3. Method according to claim 1 or 2, **characterised in that** the at least one gripping element (161, 162) has two fixing devices (164A, 164B), wherein the first fixing device (164A) engages in a first end (141A, 142A) and the second fixing device (164B) engages in a second end (141B, 142B) of the sliding element (141, 142).

4. Method according to one of claims 1 to 3, **characterised in that,** after positioning the cell stack (130) in the housing (150), the at least one sliding element (141, 142) is removed as soon as the predetermined position of the cell stack (130) in the housing (150) is reached by pulling the sliding element (141, 142) between the inner housing surface and the outer side surface of the cell stack (130) out of the housing (150) in or against the installation direction.

5. Method according to claim 4, **characterised in that,** in order to remove the sliding element (141, 142), pulling is carried out on only one of the two superimposed film webs forming the sliding element (141, 142), preferably an outer film web.

6. Method according to claim 4 or 5, **characterised in that** at least one sliding element (141, 142) is pulled out of the housing (150) by rolling it up on a roll-up element.

7. Method according to claim 4 or 5, **characterised in that** the at least one sliding element (141, 142) is pulled out of the housing (150) with the aid of the at least one gripping element (161, 162).

8. Installation device (100) for carrying out the method for installing a cell stack (130) of battery cells (131) in a housing (150) of a battery module, according to one of claims 1 to 7, having a first manipulation device (110) for arranging and/or accommodating at least one cell stack (130) of battery cells (131) and a second manipulation device (120) for accommodating a housing (150), preferably an integral one having a closed cross-section, **characterised in that** at least one sliding element (141, 142), preferably a film, can be arranged on at least one side surface of the cell stack (130), and at least one gripping element (161, 162) for the at least one sliding element (141, 142) can be moved through the housing (150).

9. Installation device (100) according to claim 8, **characterised in that** at least one sliding element (141, 142) is formed by a film which can preferably be arranged in two layers.

10. Installation device (100) according to one of claims 8 or 9, **characterised in that** at least one side surface of the cell stack (130) has an adhesive layer, wherein the side surface of the cell stack (130) is preferably formed by a compensating element.

11. Installation device (100) according to one of claims 8 to 10, **characterised in that** at least one inner housing surface - facing the at least one side surface of the cell stack (130) in the assembled state - has an adhesive layer, wherein the inner housing surface is preferably formed by a compensating element.

12. Installation device (100) according to claim 10 or 11, **characterised in that** the material of the sliding element (141, 142) and of the adhesive of the adhesive layer are matched to one another in such a way that the adhesive strength or adhesive power acting on the sliding element (141, 142) does not exceed a defined value, at least at the time when the at least one sliding element (141, 142) is pulled out between the cell stack (130) and the housing (150).

13. Installation device according to one of claims 8 to 12, **characterised in that** the second manipulation device (120) and/or the housing (150) arranged in the second manipulation device (120) can be moved linearly in the installation direction and can be fixed.

14. Installation device according to claim 13, **characterised in that** at least one roll-up element, preferably formed by a roller or reel, is provided for rolling up the sliding element (141, 142), which can be subjected to a drive torque in the rolling-up direction by an actuator.

## Revendications

1. Procédé d'installation d'une pile de cellules (130) à des cellules de batterie (131) dans un boîtier (150) d'un module de batterie,
- chaque pile de cellules (130) ayant une surface latérale extérieure qui, après l'opération d'installation, s'applique contre une surface intérieure de boîtier et pendant l'opération d'installation, la pile de cellules (130) et/ou le boîtier (150) sont déplacés transversalement à la direction de la pile dans une direction d'installation définie,
- avant l'opération d'installation, dans une première étape, sur chaque surface latérale extérieure de la pile de cellules (130) on a au moins un élément glissant (141, 142) -de préférence formé par un film-,
- au moins une extrémité (141A, 141B, 142A, 142B) de l'élément glissant (141, 142) dépasse de la surface latérale extérieure respective sur au moins un côté d'installation de la pile de cellules (130), et dans une autre étape, le boîtier (150) et la pile de cellules (130) sont déplacés l'un par rapport à l'autre dans la direction d'installation pour que, d'abord au moins une extrémité (141A, 141B, 142A, 142B) de cet élément glissant (141, 142) soit guidé dans le boîtier (150) ou que le boîtier (150) soit guidé sur au moins une extrémité (141A, 141B, 142A, 142B) de l'élément glissant (141, 142) et qu'ensuite, et dans une autre étape, la pile de cellules (130) des cellules de batterie (131) rangées les unes contre les autres -de préférence sans précontrainte- avec au moins un élément glissant (141, 142) dans le boîtier (150) ou que le boîtier (150) est emmanché sur la pile des cellules (130) des cellules de batterie (131) rangées les unes à côté des autres -de préférence sans précontrainte-, avec au moins cet élément glissant (141, 142),
- la surface intérieure de boîtier et une surface extérieure glissant à l'opposé de la pile de cellules (130) d'au moins un élément glissant (141, 142) glissent l'une sur l'autre jusqu'à ce que la pile de cellules (130) se trouve dans une position prédéterminée dans le boîtier (150),
procédé **caractérisé par**
au moins un élément de préhension (161, 162) guidé à travers le boîtier (150) en préparation de l'opération d'installation,
- cet élément de préhension (161, 162) est en prise avec au moins une extrémité (141A, 141B, 142A, 142B) de l'élément glissant (141, 142) pendant que la pile de cellules (130) glisse dans le boîtier (150).

2. Procédé selon la revendication 1,
**caractérisé en ce que**
deux bandes de film de l'élément glissant (141, 142) réalisées sous la forme d'un film, sont superposées dans la région de la surface latérale extérieure de la pile de cellules (130),
- au moins cet élément de préhension (161, 162) est en prise avec les deux extrémités (141A, 141B, 142A, 142B).

3. Procédé selon la revendication 1 ou 2,
**caractérisé en ce que**
l'élément de préhension (161, 162) dispose de deux installations de fixation (164A, 164B),
- la première installation de fixation (164A) étant en prise dans une première extrémité (141A, 142A) et la seconde installation de fixation (164B) étant en prise dans une seconde extrémité (141B, 142B) de l'élément glissant (141, 142).

4. Procédé selon l'une des revendications 1 à 3,
**caractérisé en ce que**
après la mise en place de la pile de cellules (130) dans le boîtier (150), on enlève au moins cet élément glissant (141, 142) dès que l'on arrive dans la position prédéfinie de la pile de cellules (130) dans le boîtier (150) en extrayant l'élément glissant (141, 142) entre la surface intérieure de boîtier et la surface latérale extérieure de la pile de cellules (130), hors du boîtier (150), dans le sens d'installation ou dans le sens opposé.

5. Procédé selon la revendication 4,
**caractérisé en ce que**
pour enlever l'élément glissant (141, 142) on tire seulement sur l'une deux bandes de film superposées -formant l'élément glissant (141, 142)-, de préférence, sur la bande de film extérieure.

6. Procédé selon la revendication 4 ou 5,
**caractérisé en ce que**
on extrait hors du boîtier (150) au moins un élément glissant (141, 142) en l'enroulant sur un élément d'enroulement.

7. Procédé selon la revendication 4 ou 5,
**caractérisé en ce que**
on extrait hors du boîtier (150) cet élément glissant (141, 142) à l'aide d'au moins un élément de préhension (161, 162).

8. Dispositif d'installation (100) pour la mise en oeuvre du procédé d'installation d'une pile de cellules (130) à des cellules de batterie (131) dans un boîtier (150) d'un module de batterie selon l'une des revendications 1 à 7, avec une première installation de manipulation (110) pour installer et/ou recevoir au moins une pile de cellules (130) à des cellules de batterie (131) et au moins une seconde installation de manipulation (120) pour recevoir un boîtier (150) -de préférence en une seule pièce ayant une section fermée-,
dispositif **caractérisé en ce que**
au moins cet élément glissant (141, 142), de préférence, un film, est prévu sur au moins une surface latérale de la pile de cellules (130) et au moins un élément de préhension (161, 162) pour au moins cet élément glissant (141, 142) est déplacé à travers le boîtier (150).

9. Dispositif d'installation (100) selon la revendication 8,
**caractérisé en ce que**
au moins un élément glissant (141, 142) est formé par un film installé, de préférence en double couche.

10. Dispositif d'installation (100) selon l'une des revendications 8 ou 9, **caractérisé en ce que**
au moins une surface latérale de la pile de cellules (130) a une couche d'adhésif,
- de préférence, la surface latérale de la pile de cellules (130) est formée par un élément compensateur.

11. Dispositif d'installation (100) selon l'une des revendications 8 à 10, **caractérisé en ce que**
au moins une surface intérieure de boîtier -à l'état assemblé tournée vers
- au moins une surface latérale de la pile de cellules (130)- a une surface adhésive, et
- de préférence la surface intérieure de boîtier est formée par un élément compensateur.

12. Dispositif d'installation (100) selon la revendication 10 ou 11,
**caractérisé en ce que**
la matière de l'élément glissant (141, 142) et l'adhésif de la couche adhésive sont accordés l'un à l'autre pour que la force adhésive ou la force d'accrochage agissant sur l'élément glissant (141, 142) ne dépasse pas une valeur définie au moins au moment de l'extraction de cet élément glissant (141, 142) entre la pile de cellules (130) et le boîtier (150).

13. Dispositif d'installation selon l'une des revendications 8 à 12,
**caractérisé en ce que**
la seconde installation de manipulation (120) et/ou le boîtier (150) dans la seconde installation de manipulation (120) sont mobiles dans la direction linéaire d'installation et peuvent se fixer.

14. Dispositif d'installation selon la revendication 13,
**caractérisé en ce que**
au moins un élément d'enroulement formé de préférence par un cylindre ou un dévidoir est prévu pour enrouler l'élément glissant (141, 142) recevant un couple d'entraînement dans la direction d'enroulement par un actionneur.
